# EUROPÄISCHE PATENTSCHRIFT

(11) **EP 2 815 657 B1**
(45) Veröffentlichungstag und Bekanntmachung des Hinweises auf die Patenterteilung: **31.07.2019**
(21) Anmeldenummer: 14170857.8
(22) Anmeldetag: 03.06.2014
(51) Int. Cl.: A24C 5/60, A24C 5/14

(54) **Maschine der Tabak verarbeitenden Industrie, insbesondere Filteransetzmaschine**
Machine for the tobacco processing industry, in particular filter assembly machine
Machine de l'industrie de traitement du tabac, en particulier machine d'assemblage de filtres

(30) Priorität: 18.06.2013 DE 102013211424
(43) Veröffentlichungstag der Anmeldung: 24.12.2014
(73) Patentinhaber: Hauni Maschinenbau GmbH, 21033 Hamburg (DE)
(72) Erfinder: Graßmel, Ralf, 21635 Jork (DE); Meißner, Stefan, 21493 Schwarzenbek (DE)
(74) Vertreter: Seemann & Partner Patentanwälte mbB

(56) Entgegenhaltungen:
- EP-A1- 1 533 068
- EP-A2- 0 881 026
- DE-A1- 2 751 522
- DE-A1- 2 754 104
- DE-A1- 2 920 264
- US-A- 4 524 785

## Beschreibung

Die Erfindung betrifft eine Maschine der Tabak verarbeitenden Industrie, insbesondere Filteransetzmaschine, mit einem Maschinengestell, wobei das Maschinengestell derart ausgebildet und eingerichtet ist, dass am Maschinengestell Förderanordnungen für stabförmige Artikel der Tabak verarbeitenden Industrie und/oder für deren Komponenten vorgesehen sind.

Ferner betrifft die Erfindung eine Anordnung mit einer Maschine der Tabak verarbeitenden Industrie und einer externen Laserversorgungseinheit sowie eine Laserversorgungseinheit für wenigstens eine Lasereinrichtung zur Bearbeitung von stabförmigen Artikeln der Tabak verarbeitenden Industrie und/oder deren Komponenten.

Im Stand der Technik sind Zigarettenherstellmaschinen bekannt, die folgende Hauptbaugruppen aufweisen:
- eine Verteilereinheit zum Vereinzeln von Tabakfasern und zum Bilden und Egalisieren eines Tabakstrangs,
- eine Strangeinheit zum Formen eines Zigarettenstrangs aus dem Tabakstrang durch Umhüllen des Tabakstrangs mit einem Umhüllungsstreifen wie Zigarettenpapier, der an einer Kante beleimt und anschließend überlappend verklebt wird, wonach der Tabakstrang in Tabakstöcke (einfacher oder mehrfacher Gebrauchslänge) geschnitten wird,
- sowie eine Filteransetzeinheit zur Herstellung von Filterzigaretten, bei der meist ein Filterstab mehrfacher Gebrauchslänge in kleinere Filterstopfen geschnitten wird, die zwischen zwei Tabakstöcken abgelegt und mittels beleimten Verbindungspapiers mit diesen verbunden werden, wonach die so hergestellten Doppelzigaretten durch mittiges Schneiden durch die angeklebten Filterstopfen in einzelne Filterzigaretten geteilt werden.

Unter einer Filteransetzmaschine wird eine Vorrichtung bzw. Maschine zur Herstellung von Filterzigaretten mit Mitteln zur Aufnahme von Tabakstöcken doppelter Gebrauchslänge, mit Mitteln zum Schneiden dieser doppelt langen Tabakstöcke in Tabakstöcke einfacher Länge, mit Mitteln zum Einbringen von Filterstopfen doppelter Länge zwischen die Tabakstöcke einfacher Gebrauchslänge, mit Mitteln zum Verbinden der doppelt langen Filterstopfen mit den beiden Tabakstöcken einfacher Gebrauchslänge durch Umhüllen mit einem Belagpapierblättchen, das mittels einer Schneideinrichtung von einem zugeführten Belagpapierstreifen abgetrennt wird, mit Mitteln zum Ausführen eines Trennschnittes durch den doppelt langen Filterstopfen, so dass Filterzigaretten einfacher Gebrauchslänge entstehen, verstanden. Bei einer einbahnigen Filteransetzmaschine wird eine Folge von queraxial hintereinander angeordneten und transportierten Tabakstock-Filterstopfen-Tabakstock-Gruppen als einbahniger Materialstrom zu einer Belageinrichtung zugeführt.

Beispielsweise ist in EP-B-1 213 105 eine Filteransetzmaschine offenbart.

Ferner ist im Stand der Technik bekannt, dass bei der Konfektionierung von Zigaretten an einer Filteransetzmaschine bei den hergestellten Filterzigaretten unter Verwendung einer Perforationseinrichtung Perforation aus Löchern in das Hüllmaterial oder die Umhüllungsstreifen der stabförmigen Artikel eingebracht werden. Insbesondere werden die Perforationen in die Umhüllungsstreifen unter Verwendung von Laserstrahlen als kohärente Strahlung eingebracht.

In DE 27 54 104 A1 ist beispielsweise ein Verfahren zum Steuern des Perforierens von Zigaretten oder anderen stabförmigen Rauchartikeln beschrieben.

Ferner ist in DE 27 51 522 A1 eine Vorrichtung zum Herstellen einer Zone gewünschter Luftdurchlässigkeit in einem Hüllmaterialstreifen für stabförmige Artikel der Tabak verarbeitenden Industrie auf einer die stabförmigen Artikel herstellenden Maschine beschrieben.

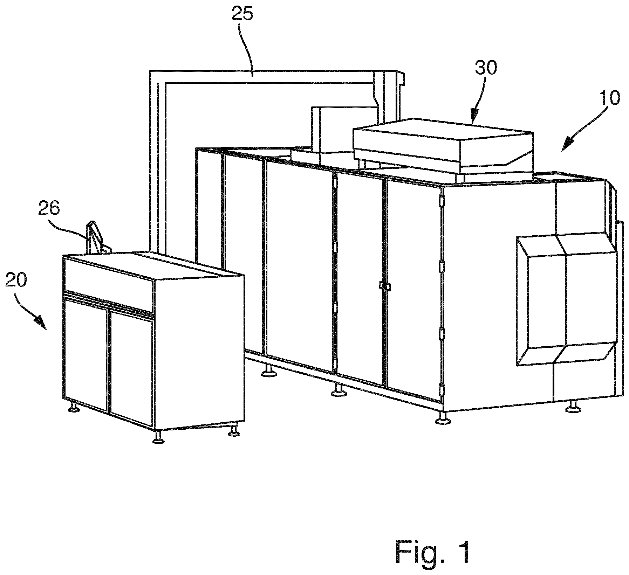

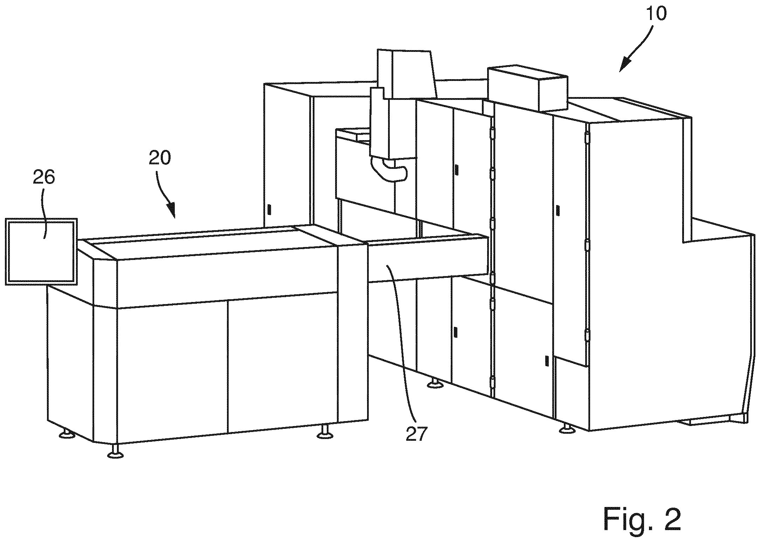

In DE-A-29 20 264 sind eine Vorrichtung sowie ein Verfahren zur Herstellung von Filterzigaretten offenbart, wobei die Außenfläche der Filtermundstücke mittels eines Lasers perforiert wird. Ferner ist gemäß den Ausführungsbeispielen in Fig. 1 und Fig. 2 eine Zigarettenmaschine beschrieben, die einen Hauptrahmen mit einer Fördertrommel aufweist, wobei oberhalb der Trommel an dem Hauptrahmen eine Halterung befestigt ist. An der Halterung ist eine Perforieroptik vorgesehen, wodurch Strahlen des Lasers als Perforierstrahlen mittels der Perforieroptik auf den Umfang der Zigaretten gerichtet werden.

Des Weiteren ist in EP-A-0 881 026 eine Filteransetzmaschine mit einer mit einem Laser arbeitenden Trennanordnung und einer Laserperforationsanordnung (vgl. Fig. 1) offenbart. Hierbei werden Streifenabschnitte von einem Streifen abgetrennt, wobei die Streifenabschnitte zum Verbinden von Zigaretten und Filterstopfen vorgesehen sind. Außerdem werden der Streifen oder die Abschnitte zum Bilden von Ventilationsperforationen perforiert.

Ferner sind in US-A-4 524 785 ein Verfahren und eine Vorrichtung zum Erzeugen von Perforationen in Zigaretten offenbart, wobei der Lichtstrahl eines Lasers mittels Reflektoren auf den Umhüllungsstreifen eines Filtermundstücks gerichtet werden, wobei die Reflektoren auf einer Herzkurve angeordnet sind.

Ausgehend von diesem Stand der Technik besteht die Aufgabe der Erfindung darin, eine Maschine der Tabak verarbeitenden Industrie mit einer Perforationseinrichtung für stabförmige Artikel und/oder für deren Komponenten bereitzustellen, wobei die Maschine auf einfache Weise an die räumlichen Gegebenheiten leicht anpassbar ist.

Gelöst wird diese Aufgabe durch eine Maschine der Tabak verarbeitenden Industrie, insbesondere Filteransetzmaschine, mit einem Maschinengestell, wobei das Maschinengestell derart ausgebildet und eingerichtet ist, dass am Maschinengestell Förderanordnungen für stabförmige Artikel der Tabak verarbeitenden Industrie und/oder für deren Komponenten vorgesehen sind und mit einer externen bzw. separaten Laserversorgungseinheit für wenigstens eine Lasereinrichtung zur Bearbeitung von stabförmigen Artikeln der Tabak verarbeitenden Industrie und/oder deren Komponenten, wobei die Laserversorgungseinheit ein eigenes separates Versorgungsgestell aufweist, wobei das Versorgungsgestell derart ausgebildet und eingerichtet ist, um eine oder mehrere Versorgungseinrichtungen für wenigstens eine Lasereinrichtung aufzunehmen, wobei das Maschinengestell eine Adaptereinrichtung für eine Lasereinrichtung aufweist, um eine Lasereinrichtung am Maschinengestell anzuordnen, und wobei das Versorgungsgestell eine Adaptereinrichtung für eine Lasereinrichtung aufweist, um eine Lasereinrichtung am oder im Versorgungsgestell anzuordnen und wobei wenigstens eine Lasereinrichtung derart ausgebildet und eingerichtet ist, dass die Lasereinrichtung im Zusammenwirken mit der Adaptereinrichtung des Maschinengestells am Maschinengestell anordbar oder angeordnet ist, wobei die Lasereinrichtung ein Resonatorgehäuse aufweist und das Resonatorgehäuse zur Anordnung am Maschinengestell eingerichtet ist, wobei der Laser als CO2-Laser ausgebildet ist.

Die Erfindung beruht auf dem Gedanken, dass eine Lasereinrichtung, die als CO₂-Laser ausgebildet ist, ohne viel Aufwand an oder in entsprechenden Herstellungsmaschinen der Tabak verarbeitenden Industrie, wie zum Beispiel in einer Filteransetzmaschine oder in einer Multifilterherstellungsmaschine, eingebaut bzw. adaptiert werden kann, wodurch beispielsweise eine Lasereinrichtung an verschiedenen Herstellungsmaschinen einsetzbar ist. Hierbei kann beispielsweise die Lasereinrichtung mit ihrem Basisgehäuse an einer Laserversorgungseinheit angeordnet sein, wodurch die Lasereinrichtung auch als maschinenexternes bzw. separates Gerät oder als maschinenexterne Einrichtung, beispielsweise hinter einer Filteransetzmaschine, angeordnet werden kann. In einer Alternative kann die Lasereinrichtung auch Teil der Herstellungsmaschine sein, so dass unter Verwendung der Adaptereinrichtung(en) an dem oder im Maschinengestell das Gehäuse der Lasereinrichtung, wie zum Beispiel das Resonatorgehäuse der Lasereinrichtung, als Bestandteil an der Maschine integriert wird, wobei die zum Betrieb benötigten Einrichtungen für die Lasereinrichtung an der externen oder separaten Laserversorgungseinheit vorgesehen sind. Hierdurch kann beispielsweise ein Laser, der für eine bestehende Filteransetzmaschine oder Multisegmentfilterherstellungsmaschine erworben worden ist, mit geringem Aufwand an einer anderen, neuen Zigarettenherstellungsmaschine eingesetzt werden bzw. dorthin transferiert werden. Dadurch können je nach Bedarf und Anwendungsfall zusätzlich Lasersysteme nacheinander an mehreren Maschinen der Tabak verarbeitenden Industrie eingesetzt werden. Somit werden vorteilhafterweise Kosten für teure Lasersysteme zum Perforieren von stabförmigen Artikeln oder deren Komponenten eingespart. Je nach Anwendungsfall kann hierbei das Lasersystem an der separaten Laserversorgungseinheit angeordnet sein oder beispielsweise als eine Art Aufsatz direkt am Maschinengestell angeordnet werden. Darüber hinaus ist es möglich, entsprechende räumliche Verhältnisse bei dem Aufbau der Maschine und bei Anordnung der Laserversorgungseinheit und der Maschine zu berücksichtigen.

Hierdurch wird ein einfacher, leicht anzupassender modularer Aufbau der Maschine und der externen Laserversorgungseinheit erreicht, so dass durch die Kombination sowie Anordnung des Maschinengestells und der externen Laserversorgungseinheit die Lasereinrichtung an zahlreichen verschiedenen Maschinen, die mit einer entsprechenden Adaptereinheit für die Lasereinrichtung ausgebildet sind, adaptierbar ist.

Dazu ist in einer Weiterbildung vorgesehen, dass das Versorgungsgestell derart ausgebildet und eingerichtet ist, um eine Steuerungseinrichtung für die Lasereinrichtung und/oder eine Kühleinrichtung für die Lasereinrichtung und/oder eine Spannungsversorgungseinrichtung für die Lasereinrichtung und/oder eine Druckluftversorgungseinrichtung für die Bearbeitung der stabförmigen Artikel und/oder deren Komponenten mittels der Lasereinrichtung, vorzugsweise im Inneren des Versorgungsgestells, aufzunehmen.

Vorteilhafterweise sind dabei im Inneren des Versorgungsgestells wenigstens eine Trennwand oder mehrere Trennwände vorgesehen, um eine Einrichtung für die Lasereinrichtung, ausgewählt aus der Gruppe bestehend aus Steuerungseinrichtung und/oder Kühleinrichtung und/oder Spannungsversorgungseinrichtung für die Lasereinrichtung und/oder Druckluftversorgungseinrichtung, gegenüber einer anderen Einrichtung, ausgewählt aus derselben Gruppe, bestehend aus Steuerungseinrichtung und/oder Kühleinrichtung und/oder Spannungsversorgungseinrichtung für die Lasereinrichtung und/oder Druckluftversorgungseinrichtung vorzugsweise vollständig bzw. im Wesentlichen vollständig abzutrennen. Hierdurch werden am Versorgungsgestell der externen Laserversorgungseinheit entsprechende räumlich getrennte Einbauräume für die Steuerungseinrichtung, die Kühleinrichtung sowie für die Spannungsversorgungseinrichtung zum Betreiben der Lasereinrichtung und die Druckluftversorgungseinrichtung für die Bearbeitung, insbesondere für die Perforierung, der stabförmigen Artikel und/oder deren Komponenten bereitgestellt, wodurch die verschiedenen genannten Betriebseinrichtungen für die Lasereinrichtung separat am oder im Versorgungsgestell angeordnet werden. Hierdurch vereinfacht sich auch die Wartung der einzelnen Betriebseinrichtungen für die Lasereinrichtung.

Ferner zeichnet sich eine Ausführungsform der Maschine dadurch aus, dass das Versorgungsgestell für die Lasereinrichtung einen, vorzugsweise separaten, Aufnahmeraum für wenigstens eine Lasereinrichtung oder für mehrere, vorzugsweise zwei, Lasereinrichtungen aufweist, wobei unter Verwendung der Adaptereinrichtung für die Lasereinrichtung die eine Lasereinrichtung im Aufnahmeraum anordbar oder angeordnet ist oder wobei unter Verwendung der oder mehrerer Adaptereinrichtungen des Versorgungsgestells die Lasereinrichtungen im Aufnahmeraum des Versorgungsgestells anordbar oder angeordnet sind. Im Rahmen der Erfindung kann dabei vorgesehen sein, dass die Lasereinrichtung mehrere Laserstrahlquellen aufweist, so dass beispielsweise bei einer mehrbahnigen Filteransetzmaschine, an der mehrere parallele Teilströme mit stabförmigen Artikeln unter Verwendung von zwei oder mehr Lasereinrichtungen perforiert werden, diese im Aufnahmeraum im Versorgungsgestell der externen Laserversorgungseinrichtung aufgenommen werden. Im Rahmen der Erfindung ist denkbar, dass die Leistungen von Lasereinrichtungen gleich oder unterschiedlich sein können.

Hierzu ist in einer Weiterbildung der Maschine außerdem vorgesehen, dass das Versorgungsgestell der Laserversorgungseinheit ein, vorzugsweise allseitig, verschließbares Gehäuse mit Klappen und/oder Türen an der Oberseite und vorzugsweise an wenigstens einer oder an allen Seitenwänden aufweist. Hierdurch ergibt sich ein eingehaustes Versorgungsgestell, wodurch durch die im Versorgungsgestell aufgenommenen Betriebseinrichtungen sowie gegebenenfalls bei Anordnung einer Lasereinrichtung in dem Versorgungsgestell sich eine kompakte Bauweise der gegebenenfalls externen Laserversorgungseinheit ergibt. Darüber hinaus wird erreicht, dass keine oder nur wenige Staubpartikel in das Innere des Versorgungsgestells gelangen, wodurch die Betriebseinrichtungen für die Lasereinrichtung sauber gehalten werden. Dazu ist das Gestell mit Klappen und/oder Türen ausgebildet, wodurch sich eine einfache und direkte Handhabung sowie allseitige Zugänglichkeit zu den Betriebseinrichtungen und/oder der Lasereinrichtung am Versorgungsgestell ergibt. Ferner lassen sich somit leicht auch Wartungsarbeiten an den Betriebseinrichtungen und/oder der Lasereinrichtung durchführen, ohne die Herstellungsmaschine vollständig abzuschalten.

Überdies zeichnet sich eine bevorzugte Ausführungsform der Maschine dadurch aus, dass bei Anordnung einer oder mehrerer Lasereinrichtungen im oder am Versorgungsgestell der Laserversorgungseinheit die Laserversorgungseinheit mittels wenigstens eines Laserstrahlführungssystems mit den Förderanordnungen der Maschine wirkverbunden ist bzw. in Wirkverbindung steht, wobei das Laserstrahlführungssystem oder die Laserstrahlführungssysteme derart ausgebildet und eingerichtet sind, dass Laserstrahlen der einen oder der Lasereinrichtungen aus der externen Laserversorgungseinheit zu einem Bearbeitungsort zum Bearbeiten, insbesondere Perforieren, der stabförmigen Artikel der Tabak verarbeitenden Industrie und/oder deren Komponenten an der Maschine geführt werden oder führbar sind.

Durch das Laserstrahlführungssystem wird erreicht, dass die Laserstrahlen der Lasereinrichtung von der externen Laserversorgungseinheit zu den entsprechenden Einheiten, wie zum Beispiel Förderorganen bzw. Fördertrommeln, an der Maschine zur Herstellung von stabförmigen Produkten, wie zum Beispiel Filterzigaretten, geführt werden, um entsprechend die stabförmigen Artikel und/oder deren Komponenten zu perforieren. Hierbei sind entsprechende Strahlteiler und/oder Umlenkspiegel und/oder weitere Führungseinrichtungen, wie z.B. Spiegel, und Optiken für die Laserstrahlen im Laserstahlführungssystem vorgesehen, um entsprechend zur Bearbeitung der stabförmigen Artikel und/oder deren Komponenten zum Bearbeitungsort an der Herstellungsmaschine zu führen.

Außerdem zeichnet sich eine bevorzugte Ausführungsform der Maschine dadurch aus, dass bei Anordnung mehrerer Lasereinrichtungen am Maschinengestell der Maschine die, vorzugsweise lasereinrichtungsfreie, separate bzw. externe Laserversorgungseinheit mittels eines Versorgungsverbindungssystems mit der oder den Lasereinrichtungen an der Maschine verbunden ist, wobei das Versorgungsverbindungssystem derart ausgebildet und eingerichtet ist, um die Steuerungseinrichtung und/oder die Kühleinrichtung und/oder die Spannungsversorgungseinrichtung mit den Lasereinrichtungen zu verbinden, so dass die an der Maschine adaptierten Lasereinrichtungen zum Bearbeiten, insbesondere zum Perforieren, der stabförmigen Artikel und/oder deren Komponenten betrieben werden oder betreibbar sind.

Des Weiteren ist es bei einer Ausführungsform der Maschine bevorzugt, dass die Laserversorgungseinheit wenigstens einen oder mehrere Anschlüsse, insbesondere Stecker oder Steckeraufnahmen, für weitere Einrichtungen aufweist und/oder dass die Laserversorgungseinheit wenigstens eine, vorzugsweise berührungssensitive, Anzeigeeinheit und/oder eine, vorzugsweise berührungssensitive, Eingabeeinheit aufweist. Die Steckverbindungen können hierbei als eine Steckverbindung für ein Bussystem sowie für Lichtleiter und weitere Datenverbindungen ausgebildet sein.

Ferner ist vorgesehen, dass bei Anordnung mehrerer Lasereinrichtungen am Maschinengestell der Maschine die externe Laserversorgungseinheit mittels eines Versorgungsverbindungssystems mit der oder den Lasereinrichtungen an der Maschine verbunden ist, wobei das Versorgungsverbindungssystem derart ausgebildet und eingerichtet ist, um die Steuerungseinrichtung und die Kühleinrichtung und die Spannungsversorgungseinrichtung mit den Lasereinrichtungen zu verbinden, so dass die Lasereinrichtungen zum Bearbeiten, insbesondere zum Perforieren, der stabförmigen Artikel und/oder deren Komponenten betrieben werden oder betreibbar sind.

Dazu ist weiter bei der Anordnung vorteilhafterweise vorgesehen, dass die Laserversorgungseinheit mehrere Stecker und/oder Steckeraufnahmen für weitere Einrichtungen aufweist und dass die Laserversorgungseinheit wenigstens eine, vorzugsweise berührungssensitive, Anzeigeeinheit und/oder eine, vorzugsweise berührungssensitive, Eingabeeinheit aufweist.

Die Anordnung kann in vorteilhaften Ausgestaltungen weitere Merkmale aufweisen, die im Zusammenhang mit der voranstehend beschriebenen Maschine der Tabak verarbeitenden Industrie genannt und erläutert wurden. Zur Vermeidung von Wiederholungen wird auf die obigen Ausführungen ausdrücklich verwiesen.

Weiterhin ist eine Laserversorgungseinheit für wenigstens eine Lasereinrichtung zur Bearbeitung von stabförmigen Artikeln der Tabak verarbeitenden Industrie und/oder deren Komponenten vorgesehen, wobei die Laserversorgungseinheit ein Versorgungsgestell aufweist, das derart ausgebildet und eingerichtet ist, eine oder mehrere Versorgungseinrichtungen für wenigstens eine Lasereinrichtung aufzunehmen, und das Versorgungsgestell eine Adaptereinrichtung für eine Lasereinrichtung aufweist, um eine Lasereinrichtung am oder im Versorgungsgestell anzuordnen und wobei wenigstens eine Lasereinrichtung derart ausgebildet und eingerichtet ist, dass die Lasereinrichtung mit einer Adaptereinrichtung einer Maschine der Tabak verarbeitenden Industrie in Wirkverbindung steht oder bringbar ist und die Lasereinrichtung im Zusammenwirken mit der Adaptereinrichtung des Versorgungsgestells am oder im Versorgungsgestell angeordnet ist, wobei das Versorgungsgestell derart ausgebildet und eingerichtet ist, um eine Steuerungseinrichtung für die Lasereinrichtung und eine Kühleinrichtung für die Lasereinrichtung und eine Steuerungsversorgungseinrichtung für die Lasereinrichtung und eine Druckluftversorgungseinrichtung aufzunehmen, wobei im Inneren des Versorgungsgestells wenigstens eine Trennwand oder mehrere Trennwände vorgesehen sind, um eine Einrichtung für die Lasereinrichtung, ausgewählt aus der Gruppe bestehend aus Steuerungseinrichtung und Kühleinrichtung und Spannungsversorgungseinrichtung für die Lasereinrichtung und Druckluftversorgungseinrichtung gegenüber einer anderen Einrichtung, ausgewählt aus derselben Gruppe, bestehend aus Steuerungseinrichtung und Kühleinrichtung und Spannungsversorgungseinrichtung für die Lasereinrichtung und Druckluftversorgungseinrichtung, vorzugsweise im Wesentlichen vollständig, abzutrennen.

Vorzugweise weist das Versorgungsgestell für die Lasereinrichtung einen separaten Aufnahmeraum für wenigstens eine Lasereinrichtung oder für mehrere, vorzugsweise zwei, Lasereinrichtungen auf, wobei unter Verwendung der Adaptereinrichtung für die Lasereinrichtung die eine Lasereinrichtung im Aufnahmeraum anordbar oder angeordnet ist oder wobei unter Verwendung der oder mehrerer Adaptereinrichtungen des Versorgungsgestells die Lasereinrichtungen im Aufnahmeraum des Versorgungsgestells anordbar oder angeordnet sind.

Darüber hinaus ist bei der Laserversorgungseinheit gemäß einer Weiterbildung vorgesehen, dass das Versorgungsgestell der Laserversorgungseinheit ein, vorzugsweise an der Oberseite und seitlich verschließbares, Gehäuse mit Klappen und/oder Türen aufweist und dass die Laserversorgungseinheit wenigstens eine, vorzugsweise berührungssensitive, Anzeigeeinheit und/oder eine, vorzugsweise berührungssensitive, Eingabeeinheit aufweist.

Insbesondere ist bei Anordnung einer oder mehrerer Lasereinrichtungen im oder am Versorgungsgestell der Laserversorgungseinheit die Laserversorgungseinheit mittels eines Laserstrahlführungssystems mit einer Maschine der Tabak verarbeitenden Industrie verbindbar, wobei das Laserführungssystem derart ausgebildet und einrichtet ist, dass Laserstrahlen der einen oder der Lasereinrichtungen aus der Laserversorgungseinheit zu einem Bearbeitungsort zum Bearbeiten, insbesondere Perforieren, der stabförmigen Artikel der Tabak verarbeitenden Industrie und/oder deren Komponenten an einer Maschine führbar sind.

Bevorzugt ist es bei einer Ausführungsform der Laserversorgungseinheit, dass bei separater Anordnung einer oder mehrerer Lasereinrichtungen die Laserversorgungseinheit mittels eines Versorgungsverbindungssystems mit der oder den separaten Lasereinrichtungen verbindbar ist, wobei das Versorgungsverbindungssystem derart ausgebildet und eingerichtet ist, um die Steuerungseinrichtung und die Kühleinrichtung und die Spannungsversorgungseinrichtung mit den separaten Lasereinrichtungen zu verbinden, so dass die eine separate Lasereinrichtung oder die separaten Lasereinrichtungen zum Bearbeiten, insbesondere zum Perforieren, der stabförmigen Artikel und/oder deren Komponenten betreibbar sind.

Vorzugsweise weist die Laserversorgungseinheit überdies mehrere Stecker und/oder Steckeraufnahmen für wenigstens zwei, insbesondere verschiedene, Maschinen der Tabak verarbeitenden Industrie und/oder für einen Anschluss an ein, insbesondere lokales, Netzwerk und/oder ein Fabriknetzwerk und/oder eine Internetverbindung und/oder eine zentrale Druckluftversorgung und/oder eine zentrale Kühlmittelversorgung auf.

Unter Verwendung einer erfindungsgemäßen Laserversorgungseinheit wird die Handhabung von einer oder mehreren Lasereinrichtungen an verschiedenen Maschinen der Tabak verarbeitenden Industrie, insbesondere Filteransetzmaschinen, erleichtert und verbessert.

Im Rahmen der Erfindung kann die Laserversorgungseinheit in vorteilhaften Ausgestaltungen weitere Merkmale aufweisen, die im Zusammenhang mit der voranstehend beschriebenen Maschine der Tabak verarbeitenden Industrie genannt und erläutert wurden. Zur Vermeidung von Wiederholungen wird auf die obigen Ausführungen ausdrücklich verwiesen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: ein Ausführungsbeispiel einer Anordnung einer Maschine zur Herstellung von stabförmigen Artikeln mit einer separaten Laserversorgungseinheit gemäß einem ersten Ausführungsbeispiel;
- Fig. 2: ein weiteres Ausführungsbeispiel einer Anordnung einer Maschine zur Herstellung von stabförmigen Artikeln mit einer Laserversorgungseinheit gemäß einem zweiten Ausführungsbeispiel;
- Fig. 3a, 3b, 3c: jeweils schematisch verschiedene Ansichten einer Laserversorgungseinheit.

In den Zeichnungen sind jeweils gleiche oder gleichartige Elemente und/oder Teile mit denselben Bezugsziffern versehen, so dass von einer erneuten Vorstellung jeweils abgesehen wird.

In Fig. 1 ist schematisch in einer perspektivischen Ansicht ein Ausführungsbeispiel einer Anordnung einer schematisch dargestellten Filteransetzmaschine 10 und einer separat aufgestellten Laserversorgungseinheit 20 dargestellt. Die Filteransetzmaschine 10 ist im Ausschnitt dargestellt, wobei aus Gründen der Übersichtlichkeit von der Einzeichnung weiterer Einheiten bzw. Einrichtungen abgesehen worden ist. In Fig. 1 ist die Rückseite der Filteransetzmaschine 10 sichtbar. Ferner weist die Filteransetzmaschine 10 ein (nicht sichtbares) Maschinengestell auf, an dem Fördertrommeln und weitere zum Betrieb notwendige Einrichtungen und Mittel angeordnet sind.

Hinter der Rückseite der Filteransetzmaschine 10 ist die hier separat aufgestellte Laserversorgungseinheit 20 angeordnet und weist ein eigenes (hier nicht dargestelltes) Versorgungsgestell auf. Die Laserversorgungseinheit 20 ist mit einem geschlossenen Gehäuse ausgebildet.

Auf der Oberseite der Filteransetzmaschine 10 ist unter Verwendung einer (nicht im Detail dargestellten) Adaptereinrichtung eine Lasereinrichtung 30 angeordnet, so dass die Lasereinrichtung 30, beispielsweise ein CO₂-Laser, zur Erzeugung von Laserstrahlen auf der Maschine lösbar angeordnet ist, so dass unter Verwendung der Laserstrahlen Perforationen in die mit der Filteransetzmaschine 10 hergestellten Filterzigaretten oder deren Komponenten erzeugt werden. Die Lasereinrichtung 30 ist dabei oberhalb des Maschinengestells der Filteransetzmaschine 10 angeordnet und mit diesem unter Zwischenschaltung der Adaptereinrichtung verbunden.

Zum Betrieb der Lasereinrichtung 30 ist die externe bzw. separat angeordnete Laserversorgungseinheit 20 über einen Verbindungskanal 25 mit der Lasereinrichtung 30 verbunden, um den Laser bzw. die Lasereinrichtung 30 entsprechend zu steuern und zu betreiben. Die für den Betrieb der Lasereinrichtung 30 notwendigen Versorgungseinheiten oder Versorgungsmodule sind dabei in der Laserversorgungseinheit 20 angeordnet bzw. untergebracht.

In Fig. 2 ist ein weiteres Ausführungsbeispiel einer Anordnung einer Filteransetzmaschine 10 und einer separat angeordneten Laserversorgungseinheit 20 perspektivisch und im Ausschnitt dargestellt. Die Laserversorgungseinheit 20 ist dabei hinter der Rückseite der Filteransetzmaschine 10 angeordnet, wobei in der Laserversorgungseinheit 20 eine Lasereinrichtung 30 angeordnet ist. Aufgrund der Verschutzung bzw. des geschlossenen Gehäuses der Laserversorgungseinheit 20 ist die Lasereinrichtung nicht sichtbar.

Durch die Anordnung von Betriebseinrichtungen für die Lasereinrichtung und die Anordnung der Lasereinrichtung in der Laserversorgungseinheit 20 wird eine kompakte Bauweise erreicht. Zur Verbindung und zum Führen des in der Laserversorgungseinheit 20 mittels der Lasereinrichtung 30 erzeugten Laserstrahls ist eine Strahlführungseinrichtung 27 in Form eines Schachts oder dergleichen vorgesehen, um die Laserstrahlen von der Laserversorgungseinheit 20 zu den Bearbeitungsstellen an der Filteransetzmaschine 10 zum Bearbeiten bzw. zum Perforieren von stabförmigen Artikeln und/oder deren Komponenten (hier nicht dargestellt) zu führen.

Dadurch, dass die Lasereinrichtung innerhalb der Laserversorgungseinheit 20 lösbar und unter Verwendung einer entsprechenden Adaptereinrichtung in der Laserversorgungseinheit 20 angeordnet ist, kann bei Kombination der Laserversorgungseinheit 20 mit einer anderen Filteransetzmaschine die Lasereinrichtung aus der Laserversorgungseinheit 20 ausgebaut werden und anschließend an einer entsprechenden mit einer Adaptereinrichtung versehenen weiteren Filteransetzmaschine 10 angeordnet werden. Anschließend werden die Betriebseinrichtungen für die Lasereinrichtung mit der dann an der Filteransetzmaschine angeordneten Lasereinrichtung verbunden, um die Lasereinrichtung entsprechend zu betreiben, wie dies im Ausführungsbeispiel gemäß Fig. 1 schematisch dargestellt ist.

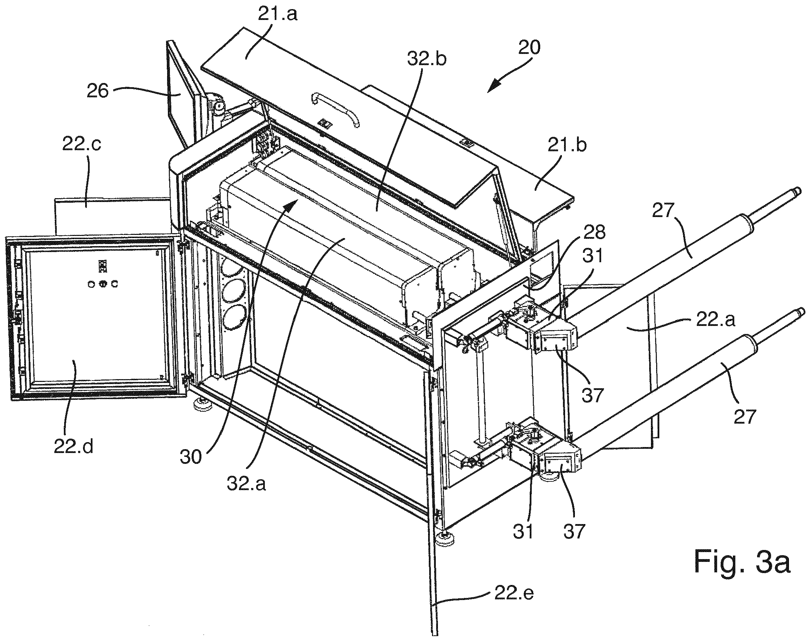

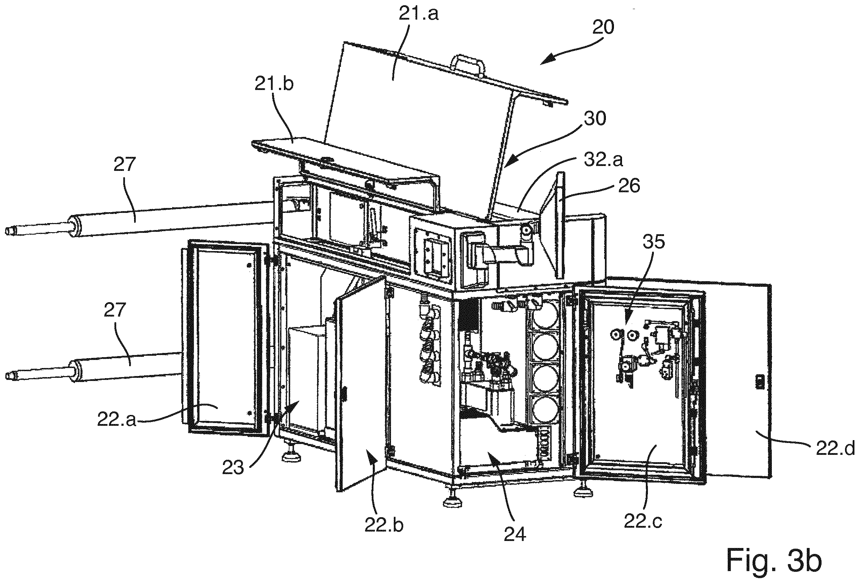

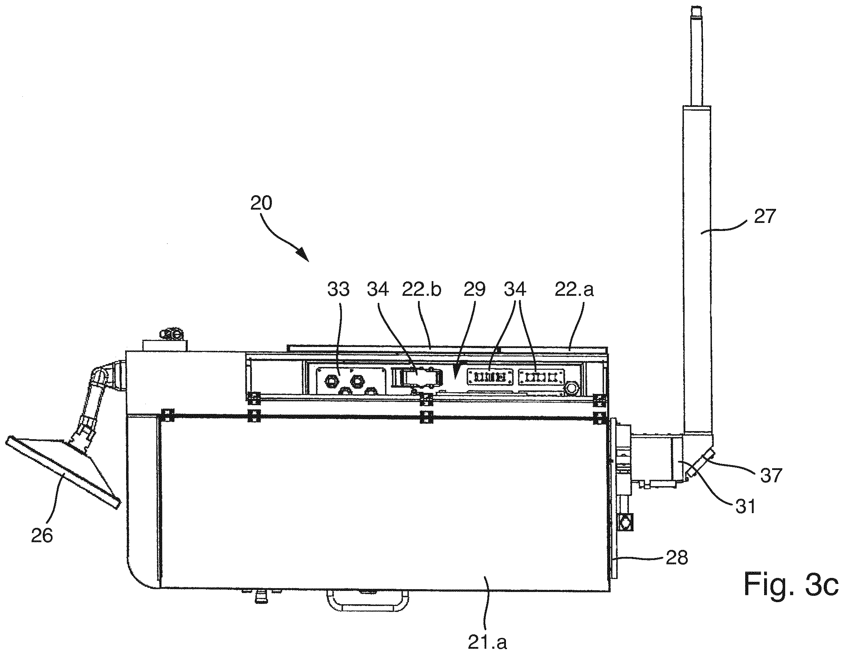

In den Fig. 3a, 3b und 3c sind verschiedene Ansichten einer Laserversorgungseinheit 20 gezeigt, wobei in Fig. 3a und 3b die Laserversorgungseinheit 20 im geöffneten Zustand dargestellt ist.

Die Laserversorgungseinheit 20 verfügt an der Oberseite über Klappen 21.a, 21.b sowie über Türen 22.a, 22.b, 22.c, 22.d und 22.e an den Längs- und Schmalseiten. Fig. 3a, 3b zeigen bei geöffneten Klappen 21.a, 21.b sowie geöffneten Türen 22.a bis 22.e perspektivische Darstellungen der Laserversorgungseinheit 20. In Fig. 3a ist eine perspektivische Ansicht der Vorderseite und in Fig. 3b eine perspektivische Rückansicht der Laserversorgungseinheit 20 schematisch dargestellt. In Fig. 3c ist eine schematische Draufsicht auf die Laserversorgungseinheit 20 gezeigt.

Wie aus Fig. 3a ersichtlich, sind im Inneren der geöffneten Laserversorgungseinheit 20 zwei Resonatoreinrichtungen 32.a und 32.b zur Erzeugung von zwei Laserstrahlen parallel nebeneinander angeordnet. Hierbei sind die Resonatoreinrichtungen 32.a, 32.b gegenüber den anderen Einbauräumen der Laserversorgungseinheit 20 im Inneren durch Trennwände separiert. Darüber hinaus sind im Inneren der Laserversorgungseinheit 20 eine Spannungsversorgungseinrichtung 23 beispielsweise in Form eines Transformators und eines Gleichstrommoduls zur Versorgung der Resonatoreinrichtungen 32.a, 32.b in einem separaten Einbauraum angeordnet.

Ferner ist in einem weiteren separaten Einbauraum eine Kühleinrichtung 24 für die Lasereinrichtung 30 im Inneren der Laserversorgungseinheit 20 angeordnet. Darüber hinaus ist auch eine entsprechende Pneumatikeinrichtung für die Filteransetzmaschine im Inneren der Laserversorgungseinheit 20 vorgesehen. Dadurch, dass unterhalb der Klappe 21.a Platz für zwei nebeneinander angeordnete Resonatoreinrichtungen 32.a, 32.b vorgesehen ist, kann wahlweise die Laserversorgungseinheit 20 mit einem oder beiden Resonatoreinrichtungen 32.a, 32.b zur Erzeugung von Laserstrahlen ausgebildet sein.

Wie aus der Darstellung in Fig. 3b ersichtlich, ist an der Innenseite im Einbauraum hinter der Tür 22.c außerdem eine Druckluftversorgungseinrichtung 35 vorgesehen.

An der Stirnseite der Laserversorgungseinheit 20 ist eine Strahlausgangsplatte 28 angeordnet, so dass die in den Resonatoreinrichtungen 32.a, 32.b erzeugten Laserstrahlen unter Verwendung von entsprechenden Optiken und weiteren optischen Einrichtungen, wie zum Beispiel einem Strahlvervielfacher oder einer integrierten Spiegelmimik und/oder Spiegel etc., von der Laserversorgungseinheit 20 zu den Bearbeitungsorten an einer Filteransetzmaschine geführt werden.

An der Strahlausgangsplatte 28 sind zwei Strahlführungseinrichtungen 27 angeordnet, um die erzeugten Laserstrahlen der Resonatoreinrichtungen 32.a, 32.b von der Laserversorgungseinheit 20 zu den Bearbeitungsstellen an der Filteransetzmaschine 10 zu führen. Die beiden Strahlführungseinrichtungen 27 sind parallel zueinander angeordnet, wobei jede Strahlführungseinrichtung 27 über eine optische Einrichtung 31 und einen Spiegel 37 mit der Strahlausgangsplatte 28 verbunden ist, um die Laserstrahlen von der Laserversorgungseinheit entsprechend umzulenken und zu führen.

Ferner ist aus der Draufsicht in Fig. 3c ersichtlich, dass die Laserversorgungseinheit 20 im Inneren über eine Steckeranordnung 29 und eine Kabeldurchführung 33 verfügt, so dass die Laserversorgungseinheit 20 an weitere Einrichtungen oder mit weiteren Steuereinrichtungen oder dergleichen verbunden wird. Die Steckeranordnung 29 kann dabei Verbindungseinrichtungen und/oder Steckvorrichtungen für Datenleitungen sowie Mehrfachstecker, Lichtleiter, Koaxialkabel und Netzwerkkabel umfassen. Hierbei sind beispielsweise Steckverbindungen 34 in Form von Steckern sowie Steckeraufnahmen bzw. Steckdosen vorgesehen. Außerdem kann auch eine Mehrfachsteckverbindung vorgesehen sein.

Zur besseren Bedienbarkeit und Steuerung der Laserversorgungseinheit 20 ist ein, vorzugsweise berührungssensitives, Display 26 seitlich am Gehäuse der Laserversorgungseinheit 20 vorgesehen.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezuqszeichenliste

- 10: Filteransetzmaschine
- 20: Laserversorgungseinheit
- 21.a, 21.b: Klappe
- 22.a - 22.e: Tür
- 23: Spannungsversorgungseinheit
- 24: Kühleinrichtung
- 25: Verbindungskanal
- 26: Display
- 27: Strahlführungseinrichtung
- 28: Strahlausgangsplatte
- 29: Steckeranordnung
- 30: Lasereinrichtung
- 32.a, 32.b: Resonatoreinrichtung
- 31: optische Einrichtung
- 33: Kabeldurchführung
- 34: Steckverbindung
- 35: Druckluftversorgungseinrichtung
- 37: Spiegel

## Patentansprüche

1. Maschine (10) der Tabak verarbeitenden Industrie, insbesondere Filteransetzmaschine (10), mit einem Maschinengestell, wobei das Maschinengestell derart ausgebildet und eingerichtet ist, dass am Maschinengestell Förderanordnungen für stabförmige Artikel der Tabak verarbeitenden Industrie und/oder für deren Komponenten vorgesehen sind und mit einer externen Laserversorgungseinheit (20) für wenigstens eine Lasereinrichtung zur Bearbeitung von stabförmigen Artikeln der Tabak verarbeitenden Industrie und/oder deren Komponenten, wobei die Laserversorgungseinheit (20) ein eigenes separates Versorgungsgestell aufweist, wobei das externe Versorgungsgestell derart ausgebildet und eingerichtet ist, um eine oder mehrere Versorgungseinrichtungen für wenigstens eine Lasereinrichtung (30) aufzunehmen, wobei das Maschinengestell eine Adaptereinrichtung für eine Lasereinrichtung (30) aufweist, um eine Lasereinrichtung (30) am Maschinengestell anzuordnen und wobei das Versorgungsgestell eine Adaptereinrichtung für eine Lasereinrichtung (30) aufweist, um eine Lasereinrichtung (30) am oder im Versorgungsgestell anzuordnen und wobei wenigstens eine Lasereinrichtung (30) derart ausgebildet und eingerichtet ist, dass die Lasereinrichtung (30) im Zusammenwirken mit der Adaptereinrichtung des Maschinengestells am Maschinengestell anordbar oder angeordnet ist, wobei die Lasereinrichtung (30) ein Resonatorgehäuse aufweist und das Resonatorgehäuse zur Anordnung am Maschinengestell eingerichtet ist, wobei der Laser als CO₂-Laser ausgebildet ist.

2. Maschine (10) nach Anspruch 1, **dadurch gekennzeichnet, dass** das Versorgungsgestell derart ausgebildet und eingerichtet ist, um eine Steuerungseinrichtung für die Lasereinrichtung (30) und/oder eine Kühleinrichtung (24) für die Lasereinrichtung (30) und/oder eine Spannungsversorgungseinrichtung (23) für die Lasereinrichtung (30) und/oder Druckluftversorgungseinrichtung (35) für die Bearbeitung der stabförmigen Artikel und/oder deren Komponenten mittels der Lasereinrichtung (30) aufzunehmen, wobei insbesondere im Inneren des Versorgungsgestells wenigstens eine Trennwand oder mehrere Trennwände vorgesehen sind, um eine Einrichtung für die Lasereinrichtung (30), ausgewählt aus der Gruppe bestehend aus Steuerungseinrichtung und/oder Kühleinrichtung (24) und/oder Spannungsversorgungseinrichtung (23) für die Lasereinrichtung (30) und/oder Druckluftversorgungseinrichtung gegenüber einer anderen Einrichtung, ausgewählt aus derselben Gruppe, bestehend aus Steuerungseinrichtung und/oder Kühleinrichtung (24) und/oder Spannungsversorgungseinrichtung (23) für die Lasereinrichtung (30) und/oder Druckluftversorgungseinrichtung im Wesentlichen vollständig abzutrennen.

3. Maschine (10) nach Anspruch 1 oder 2, **dadurch gekennzeichnet, dass** das Versorgungsgestell für die Lasereinrichtung (30) einen, vorzugsweise separaten, Aufnahmeraum für wenigstens eine Lasereinrichtung (30) oder für mehrere, vorzugsweise zwei, Lasereinrichtungen (30) aufweist, wobei unter Verwendung der Adaptereinrichtung für die Lasereinrichtung (30) die eine Lasereinrichtung (30) im Aufnahmeraum anordbar oder angeordnet ist oder wobei unter Verwendung der oder mehrerer Adaptereinrichtungen des Versorgungsgestells die Lasereinrichtungen (30) im Aufnahmeraum des Versorgungsgestells anordbar oder angeordnet sind.

4. Maschine (10) nach einem der Ansprüche 1 bis 3, **dadurch gekennzeichnet, dass** das Versorgungsgestell der Laserversorgungseinheit (20) ein, vorzugsweise allseitig, verschließbares Gehäuse mit Klappen (21.a, 21.b) und/oder Türen (22.a bis 22.c) aufweist.

5. Maschine (10) nach einem der Ansprüche 1 bis 4, **dadurch gekennzeichnet, dass** bei Anordnung einer oder mehrerer Lasereinrichtungen (30) im oder am Versorgungsgestell der Laserversorgungseinheit (20) die Laserversorgungseinheit (20) mittels wenigstens eines Laserstrahlführungssystems (27) mit den Förderanordnungen der Maschine (10) wirkverbunden ist, wobei das Laserstrahlführungssystem (27) oder die Laserstrahlführungssysteme (27) derart ausgebildet und eingerichtet sind, dass Laserstrahlen der einen oder der Lasereinrichtungen (30) aus der Laserversorgungseinheit (20) zu einem Bearbeitungsort zum Bearbeiten, insbesondere Perforieren, der stabförmigen Artikel der Tabak verarbeitenden Industrie und/oder deren Komponenten an der Maschine (10) geführt werden oder führbar sind.

6. Maschine (10) nach einem der Ansprüche 2 bis 5, **dadurch gekennzeichnet, dass** bei Anordnung mehrerer Lasereinrichtungen (30) am Maschinengestell der Maschine (10), die externe Laserversorgungseinheit (20) mittels eines Versorgungsverbindungssystems (25) mit den Lasereinrichtungen (30) an der Maschine (10) verbunden ist, wobei das Versorgungsverbindungssystem (25) derart ausgebildet und eingerichtet ist, um die Steuerungseinrichtung und die Kühleinrichtung (24) und die Spannungsversorgungseinrichtung (23) mit den Lasereinrichtungen (30) zu verbinden, so dass die Lasereinrichtungen (30) zum Bearbeiten, insbesondere zum Perforieren, der stabförmigen Artikel und/oder deren Komponenten betrieben werden oder betreibbar sind.

7. Maschine (10) nach Anspruch 6, **dadurch gekennzeichnet, dass** die Laserversorgungseinheit (20) mehrere Stecker und/oder Steckeraufnahmen für weitere Einrichtungen aufweist und dass die Laserversorgungseinheit (20) wenigstens eine, vorzugsweise berührungssensitive, Anzeigeeinheit (26) und/oder eine, vorzugsweise berührungssensitive, Eingabeeinheit aufweist.

## Claims

1. A machine (10) for the tobacco processing industry, in particular filter assembly machine (10), comprising a machine frame, wherein the machine frame is configured and designed such that conveying arrangements for rod-shaped articles of the tobacco processing industry and/or for the components thereof are provided on the machine frame, and comprising an external laser supply unit (20) for at least one laser device for processing rod-shaped articles of the tobacco processing industry and/or the components thereof, wherein the laser supply unit (20) has an individual, separate supply frame, wherein the external supply frame is configured and designed in such a manner in order to receive one or more supply devices for at least one laser device (30), wherein the machine frame has an adapter device for a laser device (30) in order to arrange a laser device (30) on the machine frame and wherein the supply frame has an adapter device for a laser device (30) in order to arrange a laser device (30) on or in the supply frame and wherein at least one laser device (30) is configured and designed in such a manner that the laser device (30) in interaction with the adapter device of the machine frame is able to be arranged or is arranged on the machine frame, wherein the laser device (30) has a resonator housing and the resonator housing is designed for arranging on the machine frame, wherein the laser is configured as a CO₂ laser.

2. The machine (10) according to Claim 1, **characterized in that** the supply frame is configured and designed in such a manner in order to receive a control device for the laser device (30) and/or a cooling device (24) for the laser device (30) and/or a voltage supply device (23) for the laser device (30) and/or compressed air supply device (35) for processing the rod-shaped articles and/or the components thereof by means of the laser device (30), wherein at least one partition or a plurality of partitions are provided, in particular, in the interior of the supply frame in order to separate substantially completely a device for the laser device (30), selected from the group consisting of the control device and/or cooling device (24) and/or voltage supply device (23) for the laser device (30) and/or compressed air supply device, relative to a further device, selected from the same group consisting of the control device and/or cooling device (24) and/or voltage supply device (23) for the laser device (30) and/or compressed air supply device.

3. The machine (10) according to Claim 1 or 2, **characterized in that** the supply frame for the laser device (30) has a, preferably separate, receiving space for at least one laser device (30) or for a plurality of, preferably two, laser devices (30), wherein by using the adapter device for the laser device (30) the one laser device (30) is able to be arranged or is arranged in the receiving space or wherein, by using the adapter device, or a plurality of adapter devices, of the supply frame, the laser devices (30) are able to be arranged or are arranged in the receiving space of the supply frame.

4. The machine (10) according to one of Claims 1 to 3, **characterized in that** the supply frame of the laser supply unit (20) has a housing which is closable, preferably on all sides, with flaps (21.a, 21.b) and/or doors (22.a to 22.c).

5. The machine (10) according to one of Claims 1 to 4, **characterized in that** when arranging one or more laser devices (30) in or on the supply frame of the laser supply unit (20), the laser supply unit (20) is operatively connected by means of at least one laser beam guiding system (27) to the conveying arrangements of the machine (10), wherein the laser beam guiding system (27) or the laser beam guiding systems (27) are configured and designed in such a manner that laser beams of the one laser device or of the laser devices (30) are guided or are able to be guided out of the laser supply unit (20) to a processing site for processing, in particular perforating, the rod-shaped articles of the tobacco processing industry and/or the components thereof on the machine (10).

6. The machine (10) according to one of Claims 2 to 5, **characterized in that** when arranging a plurality of laser devices (30) on the machine frame of the machine (10), the external laser supply unit (20) is connected by means of a supply connection system (25) to the laser devices (30) on the machine (10), wherein the supply connection system (25) is configured and designed in such a manner in order to connect the control device and the cooling device (24) and the voltage supply device (23) to the laser devices (30), so that the laser devices (30) are operated or are able to be operated for processing, in particular for perforating, the rod-shaped articles and/or the components thereof.

7. The machine (10) according to Claim 6, **characterized in that** the laser supply unit (20) has a plurality of plugs and/or plug receptacles for further devices and **in that** the laser supply unit (20) has at least one, preferably touch-sensitive, display unit (26) and/or one, preferably touch-sensitive, input unit.

## Revendications

1. Machine (10) de l'industrie de traitement du tabac, en particulier machine d'assemblage de filtres (10), avec un châssis de machine, le châssis de machine étant configuré et agencé de façon que des dispositifs de transport pour des articles en forme de tige de l'industrie de traitement du tabac et/ou pour leurs composantes soient prévus sur le châssis de machine, et avec une unité d'alimentation (20) externe de laser pour au moins un dispositif laser pour traiter des articles en forme de tige de l'industrie de traitement du tabac et/ou leurs composantes, l'unité d'alimentation (20) de laser comprenant un châssis d'alimentation propre séparé, le châssis d'alimentation externe étant configuré et agencé pour recevoir un ou plusieurs dispositifs d'alimentation pour au moins un dispositif laser (30), le châssis de machine comprenant un dispositif d'adaptation pour un dispositif laser (30) afin de disposer un dispositif laser (30) sur le châssis de machine, et le châssis d'alimentation comprenant un dispositif d'adaptation pour un dispositif laser (30) afin de disposer un dispositif laser (30) sur ou dans le châssis d'alimentation, et au moins un dispositif laser (30) étant configuré et agencé de façon telle que le dispositif laser (30), en coopération avec le dispositif d'adaptation du châssis de machine, puisse être disposé ou soit disposé sur le châssis de machine, le dispositif laser (30) comprenant un boîtier de résonance et le boîtier de résonance étant agencé pour être disposé sur le châssis de machine, le laser étant configuré comme laser au CO₂.

2. Machine (10) selon la revendication 1, **caractérisé en ce que** le châssis d'alimentation est configuré et agencé pour recevoir un dispositif de commande pour le dispositif laser (30) et/ou un dispositif de refroidissement (24) pour le dispositif laser (30) et/ou un dispositif d'alimentation en tension (23) pour le dispositif laser (30) et/ou un dispositif d'alimentation en air comprimé (35) pour le traitement des articles en forme de tige et/ou de ses composantes au moyen du dispositif laser (30), notamment à l'intérieur du châssis d'alimentation au moins une paroi de séparation ou plusieurs parois de séparation étant prévues pour séparer sensiblement entièrement un dispositif pour le dispositif laser (30) choisi dans le groupe constitué de dispositif de commande et/ou dispositif de refroidissement (24) et/ou dispositif d'alimentation en tension (23) pour le dispositif laser (30) et/ou dispositif d'alimentation en air comprimé, par rapport à un autre dispositif choisi dans le même groupe constitué de dispositif de commande et/ou dispositif de refroidissement (24) et/ou dispositif d'alimentation en tension (23) pour le dispositif laser (30) et/ou dispositif d'alimentation en air comprimé.

3. Machine (10) selon la revendication 1 ou 2, **caractérisé en ce que** le châssis d'alimentation pour le dispositif laser (30) comprend un espace de réception, de préférence séparé, pour au moins un dispositif laser (30) ou pour plusieurs, de préférence deux, dispositifs laser (30), ledit un dispositif laser (30) pouvant être disposé ou étant disposé dans l'espace de réception en utilisant le dispositif d'adaptation pour le dispositif laser (30) ou les dispositifs laser (30) pouvant être disposés ou étant disposés dans l'espace de réception du châssis d'alimentation en utilisant le ou plusieurs dispositifs d'adaptation du châssis d'alimentation.

4. Machine (10) selon l'une des revendications 1 à 3, **caractérisé en ce que** le châssis d'alimentation du dispositif d'alimentation (20) de laser comprend un boîtier verrouillable, de préférence de tous les côtés, avec des clapets (21.a, 21.b) et/ou des portes (22.a à 22.c).

5. Machine (10) selon l'une des revendications 1 à 4, **caractérisé en ce que**, lorsqu'un ou plusieurs dispositifs laser (30) sont disposés dans ou sur le châssis d'alimentation de l'unité d'alimentation (20) de laser, l'unité d'alimentation (20) de laser est relié par effet, au moyen d'au moins un système de guidage de rayon laser (27), aux dispositifs de transport de la machine (10), le système de guidage de rayon laser (27) ou les systèmes de guidage de rayon laser (27) étant configurés et agencés de façon que des rayons laser du ou des dispositifs laser (30) soient guidés ou puissent être guidés à partir de l'unité d'alimentation (20) de laser vers un endroit de traitement pour traiter, notamment perforer, les articles en forme de tige de l'industrie de traitement du tabac et/ou leurs composantes sur la machine (10).

6. Machine (10) selon l'une des revendications 2 à 5, **caractérisé en ce que**, lorsque plusieurs dispositifs laser (30) sont disposés sur le châssis de machine de la machine (10), l'unité d'alimentation (20) externe de laser est reliée aux dispositifs laser (30) sur la machine (10) au moyen d'un système de liaison d'alimentation (25), le système de liaison d'alimentation (25) étant configuré et agencé de façon à relier le dispositif de commande et le dispositif de refroidissement (24) et le dispositif d'alimentation en tension (23) aux dispositifs laser (30), si bien que les dispositifs laser (30) pour traiter, notamment pour perforer, les articles en forme de tige de l'industrie de traitement du tabac et/ou leurs composantes soient faits fonctionner ou puissent être faits fonctionner.

7. Machine (10) selon la revendication 6, **caractérisé en ce que** l'unité d'alimentation (20) de laser comprend plusieurs fiches et/ou réceptions de fiches pour d'autres dispositifs et **en ce que** l'unité d'alimentation (20) de laser comprend au moins une unité d'affichage (26), de préférence tactile, et/ou une unité de saisie, de préférence tactile.
